# EUROPEAN PATENT SPECIFICATION

(11) **EP 2 143 287 B1**
(45) Date of publication and mention of the grant of the patent: **11.07.2018**
(21) Application number: 08754945.7
(22) Date of filing: 28.04.2008
(51) Int. Cl.: H04W 4/12, H04M 1/725, H04L 12/58

(54) **SHORT MESSAGE SERVICE ENHANCEMENT TECHNIQUES FOR ADDED COMMUNICATION OPTIONS**
ERWEITERUNGSVERFAHREN MIT ZUSÄTZLICHEN KOMMUNIKATIONSOPTIONEN FÜR KURZNACHRICHTENDIENSTE
TECHNIQUE D'AMÉLIORATION DE SERVICE DE MESSAGES COURTS POUR DES OPTIONS DE COMMUNICATION AJOUTÉES

(30) Priority: 30.04.2007 US 742242
(43) Date of publication of application: 13.01.2010
(73) Proprietor: QUALCOMM Incorporated, San Diego, CA 92121-1714 (US)
(72) Inventor: MOLONEY, David J., Dublin, 8 (IE)
(74) Representative: Potter, Julian Mark
(86) International application number: PCT/US2008/061754
(87) International publication number: WO 2008/134622

(56) References cited:
- EP-A2- 1 255 418
- WO-A1-02/058414
- WO-A1-2007/037573
- WO-A2-00/21267
- US-A1- 2003 157 947
- US-A1- 2004 137 922
- US-A1- 2006 183 489
- US-A1- 2006 234 731
- US-A1- 2007 066 310
- US-A1- 2007 066 327

## Description

### BACKGROUND

Short Message Service (SMS) messaging is a form of communication supported by most mobile telephone service providers and widely available on various networks including Global System for Mobile Communications (GSM), Code Division Multiple Access (CDMA), Time Division Multiple Access (TDMA), and third generation (3G) networks. SMS messaging is described in GSM specifications such as GSM specification 03.40 "Digital cellular telecommunications system (Phase 2+); Technical realization of the Short Message Service" and GSM specification 03.38 "Digital cellular telecommunications system (Phase 2+); Alphabets and language-specific information."

In general, SMS messages from a sender terminal are transmitted to a Short Message Service Center (SMSC) which provides a store-and-forward mechanism for delivering the SMS message to one or more recipient terminals. Successful SMS message arrival may be announced by a vibration and/or a visual indication at the recipient terminal. Each SMS message may contain an SMS header including the message source (e.g., telephone number, message center, or e-mail address) and a payload containing the text portion of the message. The payload of each SMS message is limited by the supporting network infrastructure and communication protocol to no more than 140 bytes which translates to 160 7-bit characters based on a default 128-character set defined in GSM specification 03.38, 140 8-bit characters, or 70 16-bit characters for languages such as Arabic, Chinese, Japanese, Korean, and other double-byte languages.

Due to payload limitations, a long message having more than 140 bytes or 160 7-bit characters may be delivered as separate SMS messages. In some cases, the SMS infrastructure may support concatenation allowing a long message to be sent and received as multiple concatenated SMS messages. In such cases, the payload of each concatenated SMS message is limited to 140 bytes but also includes a user data header (UDH) prior to the text portion of the message. The UDH contains segmentation information for allowing the recipient terminal to reassemble the multiple concatenated SMS messages into a single long message.

In addition to alphanumeric characters, the text content of an SMS message may contain iconic characters (e.g. smiley characters) made up of a combination of standard punctuation marks such as a colon, dash, and open bracket for a smile. Iconic characters may be selected by the sender terminal, sent as punctuation equivalents, and deciphered back into iconic representations at the recipient terminal. The text content of an SMS messages also may include certain classes of hidden messages reserved for use by network operators and push e-mail clients to control data or events on the terminal.

Enhanced Messaging Service (EMS) is an application level extension to SMS described in the 3rd Generation Partnership Project (3GPP) Technical Specification (TS) 23.040 V6.7.0 (2006-03), "Technical realization of the Short Message Service." EMS extends the use of the UDH to include binary data which allows EMS-enabled terminals to send and receive text messages having simple media content such as text formatting, predefined icons, pictures, and sounds. EMS messaging is supported by the SMS infrastructure and constrained by SMS payload limits. As such, several concatenated short messages are typically required for EMS messaging since usually only one picture or sound can be sent in a single short message. If an EMS message is received by a non-enabled terminal, unreadable data will be overwritten and the message will be displayed as a normal SMS message.

Multimedia Messaging (MMS) technology provides capabilities beyond those of SMS and allows terminals to send and receive multimedia messages including graphics, video and audio clips. Unlike SMS, which depends primarily on the underlying wireless network technology (e.g. GSM, CDMA, TDMA), MMS relies on Internet Protocol (IP) technology and is designed to work with mobile packet data services such as General Packet Radio Service (GPRS) and Evolution Data Only/Evolution Data Optimized (EV-DO). Because there is less infrastructure support, however, providing MMS connectivity and interoperability among terminals is much more complex than for SMS. Furthermore, MMS messages often are billed at data rates resulting in significant charges much higher than those incurred for SMS messaging.
International Patent Application Publication Number WO00/21267 discloses the embedded meta-language may be interpreted and/or executed as programming instructions to provide added communication options for message composition and device interaction.

In general, the exchange of enhanced SMS messages may convey richer information and/or provide addition functionality beyond the standard capabilities available using normal SMS messaging. Communication among enhanced SMS clients (e.g., enhanced SMS client 150 and others) may be performed in accordance with the standard constraints (e.g., 140 byte and/or 160 character limits) on SMS message content and format. Accordingly, the enhanced SMS client may leverage the existing SMS messaging infrastructure for enhanced SMS messaging while maintaining compatibility with other SMS clients capable of exchanging standard SMS messages.
European Patent Application Publication Number EP1 255 418 A2 discloses it can be appreciated that communicating enhanced SMS clients may provide different suites of messaging options (e.g., visual options, audio options, haptic options, control options, etc.)

Accordingly, there may be a need for SMS enhancement techniques for added communication options. The object of the present invention is achieved by the embodiments described in the appended independent claims.
In the following part of the desciption, "embodiment" merely represents "example".

### BRIEF DESCRIPTION OF THE DRAWINGS

**FIG. 1** illustrates a mobile computing device in accordance with one or more embodiments.
**FIG. 2** illustrates an SMS system in accordance with one or more embodiments.
**FIG. 3** illustrates an enhanced SMS message packet in accordance with one or more embodiments.
**FIG. 4** illustrates an enhanced SMS logic flow in accordance with one or more embodiments.
**FIG. 5** illustrates an enhanced SMS messaging graphical user interface in accordance with one or more embodiments.
**FIG. 6** illustrates an enhanced SMS messaging graphical user interface in accordance with one or more embodiments.

### DETAILED DESCRIPTION

Various embodiments are directed to SMS enhancement techniques for added communication options. In one or more embodiments, a computing device may comprise an enhanced SMS client arranged to send and receive enhanced messages comprising embedded meta-language. The embedded meta-language may be interpreted and/or executed as programming instructions to provide added communication options for message composition and device interaction. The exchange of enhanced messages may convey richer information and/or provide additional functionality beyond the capabilities available using standard SMS messaging.

Enhanced SMS messaging may be performed in accordance with the standard constraints on SMS message content and format to leverage the existing SMS messaging infrastructure. When working in conjunction with the existing SMS messaging infrastructure, the enhanced SMS client may perform a negotiation or handshake to ensure that communicating devices are capable of enhanced SMS messaging to support richer information and additional functionality.

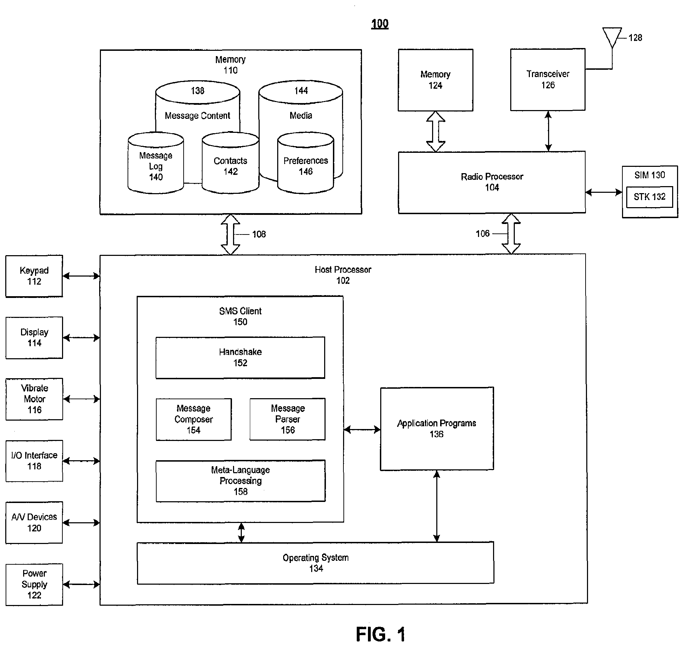

**FIG. 1** illustrates a mobile computing device 100 in accordance with one or more embodiments. The mobile computing device 100 may be implemented as a combination handheld computer and mobile telephone, sometimes referred to as a smart phone. Examples of smart phones include, for example, Palm® products such as Palm® Treo™ smart phones. The embodiments are not limited in this context.

The mobile computing device 100 may provide voice and/or data communications functionality in accordance with different types of cellular radiotelephone systems. Examples of cellular radiotelephone systems may include CDMA systems, GSM systems, North American Digital Cellular (NADC) systems, TDMA systems, Extended-TDMA (E-TDMA) systems, Narrowband Advanced Mobile Phone Service (NAMPS) systems, 3G systems such as Wide-band CDMA (WCDMA), CDMA-2000, Universal Mobile Telephone System (UMTS) systems, and so forth.

In addition to voice communications functionality, the mobile computing device 100 may be arranged to provide mobile packet data communications functionality in accordance with different types of cellular radiotelephone systems. Examples of cellular radiotelephone systems offering mobile packet data communications services may include GSM with GPRS systems (GSM/GPRS), CDMA/1xRTT systems, Enhanced Data Rates for Global Evolution (EDGE) systems, EV-DO systems, Evolution For Data and Voice (EV-DV) systems, High Speed Downlink Packet Access (HSDPA) systems, High Speed Uplink Packet Access (HSUPA), and so forth.

The mobile computing device 100 may be arranged to provide voice and/or data communications functionality in accordance with different types of wireless network systems. Examples of wireless network systems may include a wireless local area network (WLAN) system, wireless metropolitan area network (WMAN) system, wireless wide area network (WWAN) system, and so forth. Examples of suitable wireless network systems offering data communication services may include the Institute of Electrical and Electronics Engineers (IEEE) 802.xx series of protocols, such as the IEEE 802.11a/b/g/n series of standard protocols and variants (also referred to as "WiFi"), the IEEE 802.16 series of standard protocols and variants (also referred to as "WiMAX"), the IEEE 802.20 series of standard protocols and variants, and so forth.

The mobile computing device 100 may be arranged to perform data communications in accordance with different types of shorter range wireless systems, such as a wireless personal area network (PAN) system. One example of a suitable wireless PAN system offering data communication services may include a Bluetooth system operating in accordance with the Bluetooth Special Interest Group (SIG) series of protocols, including Bluetooth Specification versions v1.0, v1.1, v1.2, v2.0, v2.0 with Enhanced Data Rate (EDR), as well as one or more Bluetooth Profiles, and so forth. Other examples may include systems using infrared techniques or near-field communication techniques and protocols, such as electro-magnetic induction (EMI) techniques. An example of EMI techniques may include passive or active radio-frequency identification (RFID) protocols and devices.

As shown in the embodiment of FIG. 1, the mobile computing device 100 may comprise a dual processor architecture including a host processor 102 and a radio processor 104. In various implementations, the host processor 102 and the radio processor 104 may be arranged to communicate with each other using interfaces 106 such as one or more universal serial bus (USB) interfaces, micro-USB interfaces, universal asynchronous receiver-transmitter (UART) interfaces, general purpose input/output (GPIO) interfaces, control/status lines, control/data lines, audio lines, and so forth.

The host processor 102 may be responsible for executing various software programs such as system programs and applications programs to provide computing and processing operations for the mobile computing device 100. The radio processor 104 may be responsible for performing various voice and data communications operations for the mobile computing device 100 such as transmitting and receiving voice and data information over one or more wireless communications channels. Although some embodiments may be described as comprising a dual processor architecture for purposes of illustration, it is worthy to note that the mobile computing device 100 may comprise any suitable processor architecture and/or any suitable number of processors in accordance with the described embodiments.

The host processor 102 may be implemented as a host central processing unit (CPU) using any suitable processor or logic device, such as a as a general purpose processor. Although some embodiments may be described with the host processor 102 implemented as a CPU or general purpose processor by way of example, it may be appreciated that the embodiments are not limited in this context. For example, the host processor 102 may comprise, or be implemented as, a chip multiprocessor (CMP), dedicated processor, embedded processor, media processor, input/output (I/O) processor, co-processor, microprocessor, controller, microcontroller, application specific integrated circuit (ASIC), field programmable gate array (FPGA), programmable logic device (PLD), or other processing device in accordance with the described embodiments.

As shown, the host processor 102 may be coupled through a memory bus 108 to a memory 110. The memory bus 108 may comprise any suitable interface and/or bus architecture for allowing the host processor 102 to access the memory 110. Although the memory 110 may be shown as being separate from the host processor 102 for purposes of illustration, it is worthy to note that in various embodiments some portion or the entire memory 110 may be included on the same integrated circuit as the host processor 102. Alternatively, some portion or the entire memory 110 may be disposed on an integrated circuit or other medium (e.g., hard disk drive) external to the integrated circuit of the host processor 102. In various embodiments, the mobile computing device 100 may comprise an expansion slot to support a multimedia and/or memory card, for example.

The memory 110 may be implemented using any computer-readable media capable of storing data such as volatile or non-volatile memory, removable or non-removable memory, erasable or non-erasable memory, writeable or re-writeable memory, and so forth. Examples of computer-readable storage media may include, without limitation, random-access memory (RAM), dynamic RAM (DRAM), Double-Data-Rate DRAM (DDRAM), synchronous DRAM (SDRAM), static RAM (SRAM), read-only memory (ROM), programmable ROM (PROM), erasable programmable ROM (EPROM), electrically erasable programmable ROM (EEPROM), flash memory (e.g., NOR or NAND flash memory), content addressable memory (CAM), polymer memory (e.g., ferroelectric polymer memory), phase-change memory, ovonic memory, ferroelectric memory, silicon-oxide-nitride-oxide-silicon (SONOS) memory, magnetic or optical cards, or any other type of media suitable for storing information.

The mobile computing device 100 may comprise an alphanumeric keypad 112 coupled to the host processor 102. The keypad 112 may comprise, for example, a QWERTY key layout and an integrated number dial pad. The mobile computing device 100 also may comprise various keys, buttons, and switches such as, for example, input keys, preset and programmable hot keys, left and right action buttons, a navigation button such as a multidirectional navigation button, phone/send and power/end buttons, preset and programmable shortcut buttons, a volume rocker switch, a ringer on/off switch having a vibrate mode, and so forth.

The mobile computing device 100 may comprise a display 114 coupled to the host processor 102. The display 114 may comprise any suitable visual interface for displaying content to a user of the mobile computing device 100. In one embodiment, for example, the display 114 may be implemented by a liquid crystal display (LCD) such as a touch-sensitive color (e.g., 16-bit color) thin-film transistor (TFT) LCD screen. In some embodiments, the touch-sensitive LCD may be used with a stylus and/or a handwriting recognizer program.

The mobile computing device 100 may comprise a vibrate motor 116 coupled to the host processor 102. The vibrate motor 116 may be enable or disabled according to the preferences of the user of the mobile computing device 100. When enabled, the vibrate motor 116 may cause the mobile computing device 100 to move or shake in a generic and/or patterned fashion in response to a triggering event such as the receipt of a telephone call, text message, an alarm condition, a game condition, and so forth. Vibration may occur for a fixed duration and/or periodically according to a pulse, for example.

The mobile computing device 100 may comprise an input/output (I/O) interface 118 coupled to the host processor 102. The I/O interface 118 may comprise one or more I/O devices such as a serial connection port, an infrared port, integrated Bluetooth wireless capability, and/or integrated 802.11x (WiFi) wireless capability, to enable wired (e.g., USB cable) and/or wireless connection to a local computer system, such as a local personal computer (PC). In various implementations, mobile computing device 100 may be arranged to transfer and/or synchronize information with the local computer system.

The host processor 102 may be coupled to various audio/video (A/V) devices 120 that support A/V capability of the mobile computing device 100. Examples of A/V devices 120 may include, for example, a microphone, one or more speakers, an audio port to connect an audio headset, an audio coder/decoder (codec), an audio player, a MIDI device, a digital camera, a video camera, a video codec, a video player, and so forth.

The host processor 102 may be coupled to a power supply 122 arranged to supply and manage power to the elements of the mobile computing device 100. In various embodiments, the power supply 122 may be implemented by a rechargeable battery, such as a removable and rechargeable lithium ion battery to provide direct current (DC) power, and/or an alternating current (AC) adapter to draw power from a standard AC main power supply.

As mentioned above, the radio processor 104 may perform voice and/or data communication operations for the mobile computing device 100. For example, the radio processor 104 may be arranged to communicate voice information and/or data information over one or more assigned frequency bands of a wireless communication channel. In various embodiments, the radio processor 104 may be implemented as a communications processor using any suitable processor or logic device, such as a modem processor or baseband processor. Although some embodiments may be described with the radio processor 104 implemented as a modem processor or baseband processor by way of example, it may be appreciated that the embodiments are not limited in this context. For example, the radio processor 104 may comprise, or be implemented as, a digital signal processor (DSP), media access control (MAC) processor, or any other type of communications processor in accordance with the described embodiments.

In various embodiments, the radio processor 104 may perform analog and/or digital baseband operations for the mobile computing device 100. For example, the radio processor 104 may perform digital-to-analog conversion (DAC), analog-to-digital conversion (ADC), modulation, demodulation, encoding, decoding, encryption, decryption, and so forth.

The mobile computing device 100 may comprise a memory 124 coupled to the radio processor 104. The memory 124 may be implemented using one or more types of computer-readable media capable of storing data such as volatile or non-volatile memory, removable or non-removable memory, erasable or non-erasable memory, writeable or re-writeable memory, and so forth. The memory 124 may comprise, for example, flash memory and secure digital (SD) RAM. Although the memory 124 may be shown as being separate from and external to the radio processor 104 for purposes of illustration, it is worthy to note that in various embodiments some portion or the entire memory 124 may be included on the same integrated circuit as the radio processor 104.

The mobile computing device 100 may comprise a transceiver module 126 coupled to the radio processor 104. The transceiver module 126 may comprise one or more transceivers arranged to communicate using different types of protocols, communication ranges, operating power requirements, RF sub-bands, information types (e.g., voice or data), use scenarios, applications, and so forth. In various embodiments, the transceiver module 126 may comprise one or more transceivers arranged to support voice communication for a cellular radiotelephone system such as a GSM, UMTS, and/or CDMA system. The transceiver module 126 also may comprise one or more transceivers arranged to perform data communications in accordance with one or more wireless communications protocols such as WWAN protocols (e.g., GSM/GPRS protocols, CDMA/1xRTT protocols, EDGE protocols, EV-DO protocols, EV-DV protocols, HSDPA protocols, etc.), WLAN protocols (e.g., IEEE 802.1 1a/b/g/n, IEEE 802.16, IEEE 802.20, etc.), PAN protocols, Infrared protocols, Bluetooth protocols, EMI protocols including passive or active RFID protocols, and so forth. In some embodiments, the transceiver module 126 may comprise a Global Positioning System (GPS) transceiver to support position determination and/or location-based services.

The transceiver module 126 generally may be implemented using one or more chips as desired for a given implementation. Although the transceiver module 126 may be shown as being separate from and external to the radio processor 104 for purposes of illustration, it is worthy to note that in various embodiments some portion or the entire transceiver module 126 may be included on the same integrated circuit as the radio processor 104. The embodiments are not limited in this context.

The mobile computing device 100 may comprise an antenna system 128 for transmitting and/or receiving electrical signals. As shown, the antenna system 128 may be coupled to the radio processor 104 through the transceiver module 126. The antenna system 128 may comprise or be implemented as one or more internal antennas and/or external antennas.

The mobile computing device 100 may comprise a subscriber identity module (SIM) 130 coupled to the radio processor 104. The SIM 130 may comprise, for example, a removable or non-removable smart card arranged to encrypt voice and data transmissions and to store user-specific data for allowing a voice or data communications network to identify and authenticate the user. The SIM 130 also may store data such as personal settings specific to the user. In some embodiments, the SIM 130 may be implemented as an UMTS universal SIM (USIM) card or a CDMA removable user identity module (RUIM) card. The SIM 130 may comprise a SIM application toolkit (STK) 132 comprising a set of programmed commands for enabling the SIM 130 to perform various functions. In some cases, the STK 132 may be arranged to enable the SIM 130 to independently control various aspects of the mobile computing device 100.

As mentioned above, the host processor 102 may be arranged to provide processing or computing resources to the mobile computing device 100. For example, the host processor 102 may be responsible for executing various software programs including system programs such as operating system (OS) 134 and application programs 136. System programs generally may assist in the running of the mobile computing device 100 and may be directly responsible for controlling, integrating, and managing the individual hardware components of the computer system. The OS 134 may be implemented, for example, as a Palm OS®, Palm OS® Cobalt, Microsoft® Windows OS, Microsoft Windows® CE OS, Microsoft Pocket PC OS, Microsoft Mobile OS, Symbian OS™, Embedix OS, Linux OS, Binary Run-time Environment for Wireless (BREW) OS, JavaOS, a Wireless Application Protocol (WAP) OS, or other suitable OS in accordance with the described embodiments. The mobile computing device 100 may comprise other system programs such as device drivers, programming tools, utility programs, software libraries, application programming interfaces (APIs), and so forth.

Application programs 136 generally may allow a user to accomplish one or more specific tasks. In various implementations, the application programs 136 may provide one or more graphical user interfaces (GUIs) to communicate information between the mobile computing device 100 and a user. In some embodiments, application programs 136 may comprise upper layer programs running on top of the OS 134 of the host processor 102 that operate in conjunction with the functions and protocols of lower layers including, for example, a transport layer such as a Transmission Control Protocol (TCP) layer, a network layer such as an Internet Protocol (IP) layer, and a link layer such as a Point-to-Point (PPP) layer used to translate and format data for communication.

Examples of application programs 136 may include, without limitation, messaging applications, web browsing applications, personal information management (PIM) applications (e.g., contacts, calendar, scheduling, tasks), word processing applications, spreadsheet applications, database applications, media applications (e.g., video player, audio player, multimedia player, digital camera, video camera, media management), gaming applications, and so forth. It is also to be appreciated that the mobile computing device 100 may implement other types of applications in accordance with the described embodiments.

Messaging applications may be arranged to communicate various types of messages in a variety of formats. Each messaging application may be representative of a particular kind of transport, enabling handling of messages of particular types and formats for the particular application. The messaging applications may comprise, for example, a telephone application such as a cellular telephone application, a Voice over Internet Protocol (VoIP) application, a Push-to-Talk (PTT) application, and so forth. The messaging applications may further comprise a voicemail application, a facsimile application, a video teleconferencing application, an IM application, an e-mail application, an SMS application, and an MMS application. It is to be understood that the embodiments are not limited in this regard and that the messaging applications may include any other type of messaging or communications application in accordance with the described embodiments.

The mobile computing device 100 may comprise a message content database 138. The message content database 138 may be arranged to store content and attachments (e.g., media objects) for various types of messages sent and received by one or more messaging applications. The message content database 138 may be implemented in the memory 110 of the mobile computing device 100, for example.

The mobile computing device 100 may comprise a message log 140. The message log 140 may be arranged to track various types of messages which are sent and received by one or more messaging applications. Entries in the message log 140 may reflect recently made and/or attempted communications. In some implementations, the entries in the message log 140 may be accessed by the user for replying to a missed message and/or for reinitiating or reattempting communication with a particular individual.

The mobile computing device 100 may comprise a contacts database 142. The contacts database 142 may be arranged to store contact records for individuals or entities specified by the user of the mobile computing device 100. The contact record for an individual may comprise identifying information such as first name, last name, company/employer name, mailing addresses (e.g., home, work, other), telephone numbers (e.g., home, work, mobile, fax, pager), e-mail address (e.g., home, work, primary, alternate), IM screen names, SMS identifier, MMS identifier, personal information, notes, and so forth.

The contacts database 142 may be used or accessed when receiving and/or sending various types of messages. In some cases, identifying information (e.g., telephone number, e-mail address, IM screen name, SMS identifier, MMS identifier, etc.), included in messages received by messaging applications may be compared against the contacts database 142 to identify the sender of a message. The contacts database 142 also may be used or accessed when composing and/or sending messages. For example, the user of the mobile computing device 100 may search for and open the contact record of a particular individual to initiate communication. In addition, contact records in the contacts database 142 may be filtered and matched against text typed by a user in one or more messaging applications to facilitate message addressing.

The mobile computing device 100 may comprise a media database 144. The media database 144 may be arranged to store various types of media content such as image information, audio information, video information, A/V information, and/or other data. In some embodiments, the media database 144 may be implemented in the memory 110 of the mobile computing device 100. The media database 144 may be arranged to store various types of compressed or uncompressed content or information. The content or information may be associated with one or more images, image files, image groups, pictures, digital photographs, music files, sound files, voice information, videos, video clips, video files, video sequences, video feeds, video streams, movies, broadcast programming, television signals, web pages, user interfaces, graphics, textual information (e.g., encryption keys, serial numbers, e-mail messages, text messages, instant messages, contact lists, telephone numbers, task lists, calendar entries, hyperlinks), numerical information, alphanumeric information, character symbols, and so forth. The content or information also may include command information, control information, routing information, processing information, system file information, system library information, software (e.g., OS software, file system software, application software, game software), firmware, an application programming interface (API), a program, an applet, a subroutine, an instruction set, an instruction, computing code, logic, words, values, symbols, and so forth.

The mobile computing device 100 may comprise a preferences database 146. The preferences database 146 may be arranged to store various settings such as rules and parameters for controlling the operation of the mobile computing device 100. In some embodiments, the preferences database 146 may store privacy rules and security parameters for controlling communications options for one or more messaging applications provided by the mobile computing device 100. The preferences database 146 may be implemented in the memory 110 of the mobile computing device 100, for example.

As show in FIG. 1, the mobile computing device 100 may comprise or implement an enhanced SMS client 150 arranged to send and receive enhanced SMS messages. The enhanced SMS client 150 may be arranged to exchange enhanced SMS messages with a recipient device equipped with an identical or similar enhanced SMS client. In various embodiments, the enhanced SMS client 150 may be implemented by one or more hardware components, software components, and/or combination thereof. For example, the enhanced SMS client 150 may be implemented by enhanced SMS logic (e.g., instructions, data, and/or code) such as software to be executed by a logic device such as the processor 102 of the mobile computing device 100. The enhanced SMS logic may be arranged to identify and account for different versions and/or capabilities of other enhanced SMS clients as well as for standard SMS messaging clients.

The enhanced SMS logic may be stored internally or externally to a logic device on one or more types of computer-readable storage media such as memory 110, memory, memory 124, and so forth. In some embodiments, enhancement SMS logic may be implemented by the SIM 130. For example, the SIM 130 may comprise a STK 132 configured to act as a security layer for the enhanced SMS client 150 and/or as part of the mechanism for message interpretation or alteration. The SIM 130 also may comprise an elementary file (EF) for enhanced SMS messaging storing the enhanced SMS messaging capability of the mobile computing device 100.

In general, the exchange of enhanced SMS messages may convey richer information and/or provide addition functionality beyond the standard capabilities available using normal SMS messaging. Communication among enhanced SMS clients (e.g., enhanced SMS client 150 and others) may be performed in accordance with the standard constraints (e.g., 140 byte and/or 160 character limits) on SMS message content and format. Accordingly, the enhanced SMS client may leverage the existing SMS messaging infrastructure for enhanced SMS messaging while maintaining compatibility with other SMS clients capable of exchanging standard SMS messages.

While some embodiments and examples may be described as one-to-one communication between a single sender and a single recipient for purposes of illustration, it can be appreciated that the embodiments are not limited in this context. In particular, a sender may be arranged to communicate with multiple and numerous recipients using enhanced SMS messaging. In some cases, for example, the sender may comprise a trusted broadcasting service or system, and the recipients may comprise subscribers. In such cases, the subscribers may request or permit delivery of enhanced SMS messages comprising dynamic information content (e.g., news, sports, weather, traffic, events, notifications, alerts, etc.), media content (e.g., images, music, sounds, ringtones, video, etc.), advertising content, and so forth.

Furthermore, while some embodiments and examples may be described as communicating SMS messages, it can be appreciated that the enhanced SMS client 150 may be arranged to use one or more alternate transport mechanisms within the SMS context such as Unstructured Supplementary Service Data (USSD) in some implementations. In general, USSD is handled by the same transport mechanism as SMS but avoids the need to employ the store-and-forward capability of an SMSC. Accordingly, USSD messaging may allow faster communication among paired devices in some cases. In some implementations, the enhanced SMS client 150 may uses SMS as an initial transport mechanism and may switch to USSD if supported by the network. Thereafter, SMS and USSD may be used interchangeably. For example, USSD messaging may be used to query a remote device for GPS position and may be triggered from an STK application on the SIM 130.

In general, the enhanced SMS (or USSD) messaging functionality provided by the enhanced SMS client 150 may operate in parallel to voice and/or data communications functionality provided by the mobile computing device 100. Accordingly, the enhanced SMS client 150 may be arranged to provided added communication functionality for SMS messaging as well as for the OS 134 and application programs 136 such as telephone applications, web browsing applications, PIM applications, media applications, gaming applications, and so forth. The enhanced SMS client 150 also may be arranged to providing remote control of device such as a gaming device, A/V equipment, home automation equipment, and so forth.

When working in conjunction with the existing SMS messaging infrastructure and with standard SMS clients, the enhanced SMS client 150 may perform a negotiation or handshake to ensure that the sender and recipient devices are each capable and/or willing to communicate using enhanced SMS messaging to support richer information and additional functionality. It can be appreciated that communicating enhanced SMS clients may provide different suites of messaging options (e.g., visual options, audio options, haptic options, control options, etc.) and limitations (e.g., security limits, privacy limits, message concatenation character limits, etc.) depending on device type, client version, user settings, and so forth. After successfully completing the handshake, communicating enhanced SMS clients may recognize interaction capabilities and limitations regarding enhanced SMS messaging.

In various embodiments, the user of the mobile computing device 100 may turn the local effects of enhanced SMS messaging on and off at any time. For example, temporary and/or permanent suspension of enhanced SMS features may be implemented as part of the handshake mechanism or anytime when the user is unwilling to receive enhanced SMS messages. Suspension of enhanced SMS messaging may be implemented with respect to one or more addresses and/or categories of addresses and may occur with or without notifying the sender. For instance, a sender may be notified that the user is currently or permanently unwilling to accept enhanced SMS messages. In some embodiments, the enhanced SMS client 150 may be arranged to automatically notify a category of people of enhanced SMS messaging status (e.g., busy, available, do not disturb, etc.). Notifications may be implemented reactively or proactively upon status change. In some case, the user of the mobile computing device 100 may send a public notification of "no longer accepting enhanced messages" to one or more addresses and/or may configure preferences to that effect. In such cases, a handshake or other mechanism may automatically respond to inbound messages with a request for temporary or permanent removal from the enhanced SMS messaging database of the sender.

The negotiation may comprise a client-to-client handshake to identify a suitably equipped enhanced SMS client and/or to verify that an address is associated with a device capable of enhanced SMS messaging. The negotiation or handshake may be performed manually or automatically and may visible or transparent to the users of communicating devices. In some implementations, the handshake may be repeated periodically to ensure or confirm that a particular address supports enhanced SMS messaging and/or that a shared trust level is still valid.

The enhanced SMS client 150 may be arranged to determine whether a destination address is capable of enhanced SMS messaging. For example, when composing a new outbound SMS message, the enhanced SMS client 150 may compare the address of the recipient to a contact record in the contacts database 142 indicating whether or not the address is capable of receiving enhanced SMS messages. Likewise, when responding to an SMS message, the enhanced SMS client 150 may determine whether the address of the original sender is capable of receiving enhanced SMS messages. Data regarding enhanced SMS messaging capability for a particular address may be stored in the message log 140 (e.g., as part of a conversation or chat record), the contacts database 142, and/or any other suitable memory location.

The enhanced SMS client 150 may be arranged to record inbound and outbound SMS traffic by destination address. For example, enhanced SMS client 150 may record SMS traffic in the message log 140 implemented by a database in memory 110. The message log 140 may be arranged to maintain a history that records addresses and the date/time of inbound and outbound SMS messages. The enhanced SMS client 150 also may be arranged to access message content database 138.

The enhanced SMS client 150 may determine if enhanced SMS messages previously were received from a particular address. The enhanced SMS client 150 may update a contact record associated with a particular address upon receiving an enhanced SMS message from the address. The enhanced SMS client 150 may be arranged to determine if enhanced SMS messages previously sent to a particular address were confirmed as being successfully received. The enhanced SMS client 150 may be arranged to update a contact record associated with a particular address upon receiving a confirmation message from the address indicating the successful receipt and execution of an enhanced SMS message. It can be appreciated that the contact record for a particular individual may be associated with several inbound telephone numbers or addresses corresponding to several types of communications devices, for example. Accordingly, information regarding enhanced SMS capability may be flexibly managed separately and/or aggregately for addresses, telephone numbers, and/or individuals.

In some cases, even when a particular address previously was identified as being capable of enhanced SMS messaging, the enhanced SMS client 150 may be arranged to verify or confirm that the enhanced SMS capabilities of the destination address are current. For example, enhanced SMS capability data may age requiring periodic re-verification. The aging limits for certain enhanced SMS capabilities and/or addresses may be predefined and/or configurable by the enhanced SMS client 150. In some embodiments, certain predefined events may trigger re-verification and/or the enhanced SMS client 150 may implement randomized re-verification. For security, one re-authentication trigger could be random mutual exchange of pre-shared keys embedded in the message payload when space is available.

If data regarding enhanced SMS capabilities for a particular address is unavailable and/or requires verification or re-verification, the enhanced SMS client 150 may be arranged to perform a handshake or negotiation to identify and/or authenticate an enhanced SMS client residing on a recipient device. For example, a handshake may be required for initial communication to a given destination address in order to establish if the recipient device is equipped with an enhanced SMS client. A handshake also may be required to confirm that the address is associated with a recipient device equipped with an enhanced SMS messaging client when a significant amount of time has passed since the last communication. It can be appreciated that the enhanced SMS client 150 may enable a user to preset or configure certain destination addresses to override negotiation and/or enhanced SMS capability data aging in some cases.

The enhanced SMS client 150 may be arranged to perform a handshake or negotiation with a remote device to identify and authenticate another enhanced SMS client through an interchange of SMS messages. The enhanced SMS client 150 may be used to compose and send an SMS message to one or more remote devices to initiate a handshake or negotiation. In the event that there has been no prior communication with a given address or when reconfirmation is required, the enhanced SMS client 150 may send an initial SMS message to a given destination address to initiate a handshake. The initial SMS message may comprise a small handshake request token or appendix added to the text portion of the message being sent from the SMS client. The handshake request token may be visible or transparent to the user. In various embodiments, the handshake request token may comprise a two or three character appendix such as a sequence of punctuation marks or symbols that have no other predefined meaning in the standard SMS character set. For example, the handshake request token for initiating the negotiation may comprise two periods, three characters such as -*- or the like appended to the text portion in the payload.

The SMS client 150 may be arranged to operate using the underlying infrastructure for standard SMS messaging and to abide by the 140 byte and/or 160 character payload constraints for standard SMS message content. Accordingly, in various embodiments, the enhanced SMS client 150 may limit the payload and/or text entered by the user for an initial SMS message by a few characters, such as from 160 characters to 157 characters in order to accommodate a three character handshake request token included in the first communication.

In one example, the content of an initial SMS message may include an SMS header comprising a destination address or mobile telephone number such as +353878776543 and a payload comprising visible text content input by the user such as:
Hi. Will be home late. Working on patent application. CU 18r.*-)

In this example, the payload and/or amount of text that can be entered by the user for the initial SMS message may be limited by three characters (e.g., to 157 characters), and a visible handshake token -*- may be appended to the text entered by the user. As such, the content of the initial SMS message to be sent may comprise the destination address of the recipient plus the text of the message plus the three character appendix for initiating the handshake. The text portion of the payload may comprise:
Hi. Will be home late. Working on patent application. CU 18r. *-)-*-

In the event that the recipient device that receives the appended handshake request token is not equipped with an enhanced SMS client, the initial SMS message is rendered as a standard SMS text message with the sequence of punctuation marks or symbols comprising the handshake request token at the end. In such case, the recipient device may respond in a normal way or make no response. For example, upon receipt of the message, the appended characters -*- representing the handshake request may be ignored by the recipient device.

If the handshake request is ignored, the enhanced SMS client 150 may assume that recipient device currently is incapable of enhanced SMS messaging. In some cases, the enhanced SMS client may defer making any conclusions regarding the enhanced SMS capabilities associated with the address due to the lack of information. If the recipient device subsequently responds with a regular SMS text message, the SMS client 150 may conclude that the recipient device associated with the address does not support enhanced SMS messaging. The enhanced SMS client 150 may record and associate data with the address regarding enhanced SMS messaging capabilities. For example, the enhanced SMS client 150 may note that enhanced messaging options should be not be offered for that address for subsequent SMS messages until the presence of an enhanced SMS client can be verified. Accordingly, enhanced SMS options may only be offered by the enhanced SMS client 150 for destination addresses determined to be capable of receiving and/or providing enhanced SMS messaging.

In the event that the recipient device that receives the appended handshake request token is equipped with an enhanced SMS client, the initial SMS message is identified an SMS message event as well as a handshake event. At the recipient device, the appended handshake request token is stripped from the text portion of the message by the enhanced SMS client and the remainder of the message is shown to the recipient. The enhanced SMS client at the recipient device also may store information indicating that the address associated with the mobile computing device 100 can offer enhanced SMS messaging. For example, the recipient device may store data indicating that the address can accept enhanced SMS messages for a baseline of capabilities until learning of any extended variable capabilities.

It can be appreciated that a recipient device equipped with an enhanced SMS client may provide the user with the option of ignoring the handshake request and/or notifying the sender of a temporary or permanent unwillingness to communicate using enhanced SMS messaging. It also can be appreciated that the enhanced SMS client 150 implemented by the mobile computing device 100 may operate in similar fashion when receiving an SMS message comprising an appended handshake request token.

The enhanced SMS client 150 may be arranged to receive a confirmation or acknowledgement message from another enhanced SMS client. In response to the handshake request token, the enhanced SMS client at the recipient device may automatically send a confirmation or acknowledgement SMS message to the address of the mobile computing device 100. The acknowledge message may comprise a visible or hidden SMS message indicating that the mobile computing device 100 has been recognized as being equipped with enhanced SMS client 150.

The acknowledgment SMS message also may comprise the version and/or capabilities of the enhanced SMS client at the recipient device. For example, the acknowledgement SMS message may read "You can send and receive enhanced messages for this contact in the future.AEFF456F" where AEFF456 indicates a capability identification (Capability ID) and/or version of the enhanced SMS client at the recipient device. The recipient device also may convey restrictions placed on certain communication options according to local device security and privacy preference settings. The enhanced SMS client 150 may be arranged to record enhanced SMS capabilities associated with the address from the acknowledgement message.

In some cases, automatically sending an acknowledgement message may be optional. Instead, a small handshake response token and/or the capabilities of the enhanced SMS client at the recipient device may be appended to the next text reply message sent from the address of the recipient device. The handshake response token may be visible or transparent to the user. In various embodiments, the handshake response token may comprise a two or three character appendix such as a sequence of punctuation marks or symbols that have no other predefined meaning in the standard SMS character set. For example, the handshake response token may comprise two commas, three characters such as *-* or the like appended to the text portion in the payload.

The SMS client at the recipient may be arranged to operate using the underlying infrastructure for standard SMS messaging and to abide by the 140 byte and/or 160 character payload constraints for standard SMS message content. Accordingly, in various embodiments, the enhanced SMS client at the recipient may limit the payload and/or text entered by the user for the reply SMS message by a few characters, such as from 160 characters to 158 characters in order to accommodate a two character handshake response token included in the reply. As such, the payload and/or amount of text that can be entered by the recipient user for the next SMS message may be limited by two characters (e.g., to 158 characters), and a handshake token " may be appended to the entered text. The content of the reply SMS message may comprise the address of the sender plus the text of the message plus the two character appendix for responding to the handshake. It can be appreciated that the enhanced SMS client 150 implemented by the mobile computing device 100 may operate in similar fashion when responding to an initial SMS message comprising an appended handshake request token.

When the SMS client 150 receives an SMS message comprising an appended handshake response token, the reply SMS message is identified an SMS message event as well as a handshake event. The appended handshake response token is stripped from the text portion of the message by the enhanced SMS client 150 and the remainder of the message is shown to the user of the mobile computing device 100. The enhanced SMS client 150 may store information indicating that the address associated with the recipient can offer enhanced SMS messaging. For example, the enhanced SMS client 150 may store data indicating that the address can accept enhanced SMS messages for a baseline of capabilities until learning of any extended variable capabilities.

The enhanced SMS client 150 may be arranged to identify enhanced SMS capabilities to the recipient device associated with the address. To complete the negotiation, the mobile computing device 100 may send another outbound SMS message to the address associated with the recipient indicating capability ID and/or version of the enhanced SMS client 150. The mobile computing device 100 also may convey restrictions placed on certain communication options according to local device security and privacy preference settings. In some cases, exchanged SMS messages may be checked for validity during the negotiation or handshake as an added security measure. For example, a security code token may be appended to the request and response messages to ensure that the exchanged SMS messages are valid and not spoofed.

Once a successful negotiation has taken place, the enhanced SMS client 150 on the mobile computing device 100 and the enhanced SMS client on the recipient device each are aware of available enhanced SMS messaging capabilities. The handshake or negotiation may account for variations in enhanced SMS client versions and capabilities as well as for restrictions on certain communication options according to local device security and privacy preference settings.

In some cases, the enhanced SMS client 150 on the mobile computing device 100 and the enhanced SMS client on the recipient device may support a common capability or exchange optional enhanced capabilities when communicating with each other. For example, the enhanced SMS client 150 may be arranged to compare capabilities, store a lowest common denominator, and send the common capability to the enhanced SMS client at the recipient device. In some cases, an enhanced SMS message addressed to multiple recipients may be sent according to such lowest common denominator approach. In other cases, certain enhanced SMS message options may be available to some enhanced SMS clients and not to others.

In some cases, the lowest common denominator approach may affect the ability to forward enhanced SMS messages because the lowest common denominator will apply to the address of the forwarding participant. In such cases, the enhanced SMS client 150 may offer the option of forwarding only core SMS content (e.g., visible text and emoticons) to the forwarding address.

After enhanced SMS clients successfully complete a handshake and/or otherwise mutually identify each other, the enhanced SMS clients may offer additional communication options for message composition and device interaction. Such additional message options may be provided as new messages and/or reply messages. The enhanced SMS messages may provide additional communication options including enhanced visual, audio, tactile, and/or other control mechanisms. As such, an enhanced SMS client (e.g., enhanced SMS client 150 or an enhanced SMS client residing on a recipient device) or equipped device (e.g., mobile computing device 100 or recipient device) may have potential capabilities for reaching one or more senses of the user. The enhanced SMS client and/or equipped device also may be arranged to act according to remote data inputs or instructional sequences. For example, the enhanced SMS client 150 may act locally at the mobile computing device 100 in response to instructions sent from an enhanced SMS client residing on a remote recipient device.

In various embodiments, the enhanced SMS client 150 may be arranged to embed meta-language into an enhanced SMS message to be sent to a recipient device capable of enhanced SMS messaging. The meta-language may comprise, for example, an interpreted program, script, or other encoding format appended after the text content in the text portion of the enhanced SMS message. The meta-language may be hidden or visible to the users of communicating devices.

The enhanced SMS client 150 also may be arranged to execute meta-language embedded in an enhanced SMS message received from a sender device capable of enhanced SMS messaging. In response to receiving an enhanced SMS message, the enhanced SMS client 150 residing on the mobile computing device 100 may be arranged to parse the text content from the text portion of the enhanced SMS message using standard delimiters, for example. The remainder of the text portion of the enhanced SMS message comprising the appended meta-language may be interpreted and/or executed as programming instructions by the enhanced SMS client 150 to perform one or more device-specific functions at the mobile computing device 100.

In various embodiments, the embedded meta-language program instructions may be arranged to allow abstraction into device-specific functions executable by an enhanced SMS client equipped device upon receipt of the enhanced SMS message. The meta-language may comprise device-specific functions such as predefined verb actions and/or modifiers to implement added communication options. In some implementations, multiple additional communication options and/or capabilities can be combined and sequenced for parallel or sequential action. When executed by an enhanced SMS client equipped device, the embedded meta-language program instructions may provide added communication options. In some cases, the meta-language may be checked for validity prior to execution as an added security measure. For example, a security code may be appended to meta-language program instructions to ensure that the script is valid and not spoofed.

In one example, the content of an enhanced SMS message composed by the enhanced SMS client 150 may include an SMS header comprising a destination address or mobile telephone number such as +353878776543 and a payload comprising visible text content input by the user such as:
Hi. RU there?

In this example, the payload may contain a text portion including the text content and meta-language comprising a script implemented as a sequence of alphanumeric characters to be interpreted and/or executed as programming instructions by an enhanced SMS client residing on a recipient device. For example, the meta-language script PCA4B6G1L2,D4,192534a may be interpreted and/or executed to play a MIDI tune in the key of C including tones A4, B6, and Gland to loop twice; to display the text content using visual effect 4; to access pictogram bank number 9 and show images 253 and 4; and to animate image 4 for emphasis. As such, the content of the enhanced SMS message to be sent by the enhanced SMS client 150 may comprise the destination address of the recipient device plus the text of the message in delimiter plus the coded portion of the message. The text portion of the payload may comprise:
Hi. RU there? PCA4B6G1L2,D4,192534a

The SMS client 150 may be arranged to operate using the underlying infrastructure for standard SMS messaging and to abide by the 140 byte and/or 160 character payload constraints for standard SMS message content. It is noted that each meta-language script will have a character payload. Accordingly, the enhanced SMS client 150 may note the total message length and may warn of overly large messages as added options are picked and appended. In some cases, the enhanced SMS client 150 may limit the payload and/or text entered by the user for an enhanced SMS message by a certain number of characters, such as from 160 characters to 135 characters, in order to accommodate the meta-language script and avoid concatenated SMS messages.

In various implementations, the meta-language program instructions may be arranged to control various actuators for affecting the lighting or presentation of the display 114, behavior of the vibrate motor 116, operation of the I/O interface 118 (e.g., serial connections, infrared connections, Bluetooth connections, WiFi connections, etc.), performance of A/V devices 120 (e.g., speakers, audio player, video player, etc.), functioning of the power supply 122, actions of the OS 134, tasks of the applications 136 (e.g., messaging applications, web browsing application, PIM applications, etc.), accesses to memory locations (e.g., memory 110, memory 124, etc.), and/or communications functionality (e.g., radio processor 104, transceiver module 126, etc.) of the mobile computing device 100. The embodiments are not limited in this context.

In some implementations, the added communication options may comprise actions and effects for enhancing media content of enhanced SMS messages. For example, the mobile computing device 100 may comprise a media database 144 to store image information, audio information, video information, A/V information, and/or other data to be accessed and displayed in response to receiving an enhanced SMS message comprising embedded meta-language program instructions.

The added communication options may enhance visual and/or legible information by executing meta-language program instructions for pictographic messaging. For example, a certain image (e.g., picture 7 from pictogram set H) may be displayed based on a customizable set of standard-meaning pictograms, where selections may be made from pictogram sets that have a shared meaning at each computing device or terminal, but not the exact visual appearance. Other examples of added visual communication options include, without limitation, playing a predefined video clip, calling a particular pop-up image, adding color or other text effects to message text, controlling backlighting, and so forth.

The added communication options may enhance audible information by executing meta-language program instructions for controlling sound generators and/or audio players. For example, a particular predefined sound or tune (e.g., MIDI tune) may be played with a message. The sound or tune may have a shared meaning at each computing device or terminal, but not the exact composition. Other examples of added audio communication options include, without limitation, playing music in a generic or patterned fashion, looping a tune or sound a certain number of times, playing a tune in a certain key, playing a predefined audio clip, generating an alarm or alarm event, playing a predefined ringtone in a certain way, and so forth

The added communication options may enhance haptic and/or tactile information by executing meta-language program instructions for controlling vibration. For example, the meta-language program instructions may actuate the vibrate motor 116 causing the mobile computing device 100 to move or shake in a generic and/or patterned fashion. Examples of added haptic communication options include, enabling or disabling vibration, vibrating at the start of a message, vibrating at a certain time, vibrating for a fixed duration, vibrating according to a pulse, vibrating periodically, and/or coordinating or matching the vibration of the sender and recipient devices. Haptic communication options also may include directional impulses made by the computing device 100 related to current orientation based on self-awareness of orientation using accelerometers in the handset, actuating some physical change in the mobile computing device 100 such as opening a camera and taking a picture, operating a relay or actuator, and so forth.

The added communication options may enhance SMS messaging by executing meta-language program instructions for other control options to initiate a set of routines and/or otherwise affect changes on the mobile computing device 100. For example, the meta-language program instructions may set a mode or function such as turning off the mobile computing device 100 or disabling the wake-up feature upon message arrival. The meta-language program instructions may be arranged to insert a contact record (e.g., vCard entry) into a contacts database 142 or an appointment (e.g., vCal entry) into a calendar application. The meta-language program instructions may be arranged to control messaging applications such as by threading or chaining messages to other related messages such as in a remotely stored group (e.g., workgroup approval left in waiting for pickup). The meta-language program instructions may control access to data sources or memory locations for writing and/or deleting data. For example, the meta-language program instructions may instruct messaging applications to show a message in wipe-effect from left to right and then delete it and/or to delete entries from message content database 138 and/or message log 140.

The meta-language program instructions may be arranged to query the mobile computing device 100 for certain information. In response, the mobile computing device 100 may return various results to the inquiring device. For example, the meta-language program instructions may be arranged to exchange security certificates, synchronize data, acquire and reveal support or system information, and/or automatically retrieve business or system status data.

In various embodiments, the mobile computing device 100 may allow remote polling of presence or location information according to meta-language program instructions received from a trusted party, device, and/or service. The mobile computing device 100 may respond to such queries by returning a value or state making programmatic or manual presence (e.g., GPS location, out of office, at home, in car, etc.) visible to the inquiring device. In some implementations, the mobile computing device 100 may be queried for and return alternate contact information such as a designated out of office telephone number, e-mail address, or other alternate contact information for reaching the user. In some cases, the alternate contact information may be filtered according to the address associated with the inquiring device.

The meta-language program instructions may be arranged to control communications functionality of the mobile computing device 100. For example, the mobile computing device 100 may respond to such instructions by establishing a connection or bridge for communicating with a device or system over a network such as a WLAN, WMAN, WWAN, and so forth. In some cases, the mobile computing device 100 may respond to such instructions by establishing a Bluetooth connection for communicating over a WPAN with a local device or system such as a burglar alarm or home automation system.

To preserve device security and user privacy preferences, the enhanced SMS client 150 may provide configurable options to limit the depth of remote control allowed in response to receiving an enhanced SMS message comprising meta-language program instructions. In various embodiments, the mobile computing device 100 may comprise a preferences database 146 to store settings such as privacy rules and parameters for modulating the operations executed in response to inbound enhanced SMS messages. The mobile computing device 100 may display enhanced SMS messages and/or execute actions specified by meta-language program instructions based on the capabilities of the enhanced SMS client 150 as modulated by the local device security and privacy preference settings. Modulations may include customization of media content such as pictogram sets and/or sounds as well as limitations placed on certain communication options. For example, the enhanced SMS client 150 may allow musical messages and vibration control by all enhanced SMS clients, allow presence detection and data queries only from trusted enhanced SMS clients, and may require passwords for all secure actions.

In the event that the meta-language programming instructions are not validated and/or executed by the recipient device, the enhanced SMS client 150 may receive an error message (e.g., NOK message) back from the recipient device. In some implementations, the SMS client 150 may normally receive no response from a recipient device unless an error occurs or unless requesting polling information, for example. In other implementations, the enhanced SMS client 150 may request and receive a completion receipt confirming execution of the meta-language program instructions by the enhanced SMS client residing on the recipient device. A security code mechanism may be appended to the completion receipt to ensure that the response is valid and not spoofed. For example, when a remote data wipe command is issued, it is very important to ensure that the response confirming deletion is not spoofed.

As shown, the SMS client 150 may comprise several functional components or modules for performing various operations. It can be appreciated that such components or modules may be implemented by one or more hardware components, software components, and/or combination thereof. The functional components and/or modules may be implemented, for example, by logic (e.g., instructions, data, and/or code) to be executed by a logic device (e.g., processor). Such logic may be stored internally or externally to a logic device on one or more types of computer-readable storage media.

It also is to be appreciated that the described embodiments illustrate exemplary implementations, and that the functional components and/or modules may be implemented in various other ways which are consistent with the described embodiments. Furthermore, the operations performed by such components or modules may be combined and/or separated for a given implementation and may be performed by a greater number or fewer number of components or modules.

The enhanced SMS client 150 may comprise a handshake module 152 to support a handshake or negotiation. The handshake module 152 may be arranged to coordinate an exchange of SMS messages to ensure that a sender and/or recipient device is capable of enhanced SMS messaging to support richer information and additional functionality. The negotiation or handshake may be performed manually or automatically and may visible or transparent to the users of communicating devices.

The handshake module 152 may be arranged to verify or confirm that the enhanced SMS capabilities of a destination address are current. For example, enhanced SMS capability data may age requiring periodic re-verification. The handshake module 152 may operate according to predefined and/or configurable aging limits for certain enhanced SMS capabilities and/or addresses. In some embodiments, the handshake module 152 may operate in response to certain predefined events that trigger re-verification and/or may implement randomized re-verification. In some cases, the user may set certain destination addresses which override the operation of the handshake module 152.

The handshake module 152 may be arranged to add a small handshake request token or appendix to the text portion of a message. The handshake request token may be visible or transparent to the user. In various embodiments, the handshake request token may comprise a two or three character appendix such as a sequence of punctuation marks or symbols that have no other predefined meaning in the standard SMS character set (e.g., two periods, three characters such as -*- or the like).

In response to receiving an appended handshake request token, the handshake module 152 may identify a handshake event and store information indicating that the address can offer enhanced SMS messaging. The handshake module 152 also may be arranged to send a confirmation or acknowledgement message in response to the handshake request token. The acknowledge message may comprise a visible or hidden SMS message indicating that another device has been recognized as being equipped with an enhanced SMS client. The acknowledgment message also may comprise the version and/or capabilities of the enhanced SMS client 150 as well as restrictions placed on certain communication options according to local device security and privacy preference settings.

In some cases, the handshake module 152 may be arranged to add a small handshake response token and/or the capabilities of the enhanced SMS client to a reply message. The handshake response token may be visible or transparent to the user. In various embodiments, the handshake response token may comprise a two or three character appendix such as a sequence of punctuation marks or symbols that have no other predefined meaning in the standard SMS character set (e.g., two commas, three characters such as *-* or the like).

In response to an acknowledgement message or handshake response token, the handshake module 152 may identify the enhanced SMS capabilities of the enhanced SMS client 150 to a remote device to complete the handshake. For example, an outbound SMS message may be sent indicating capability ID and/or version of the enhanced SMS client 150 as wells as restrictions placed on certain communication options according to local device security and privacy preference settings.

In some cases, the handshake module 152 may be arranged to check the validity of exchanged SMS messages during the negotiation or handshake as an added security measure. For example, a security code token may be appended to the request and response messages to ensure that the exchanged SMS messages are valid and not spoofed.

The enhanced SMS client 150 may comprise a message composer module 154 to support the composition and sending of outbound enhanced SMS messages including new messages and reply messages. The composer module 154 may be arranged to receive user input from the keypad 112 and to present an enhanced SMS messaging GUI on the display 114.

The composer module 154 may be arranged to determine the recipient of an outbound enhanced SMS message and to offer additional communication options for message composition and device interaction, as described above. The composer module 154 may be arranged to display an enhanced SMS messaging GUI comprising a pick list of various message options. The message options may include enhanced visual, audio, tactile, and/or other control mechanisms.

The SMS client 150 may comprise a message parser module 154 to support the receiving and interpretation of inbound enhanced SMS messages. The parser module 154 may be arranged to determine the sender of an incoming enhanced SMS message and to parse the text content from the text portion of the enhanced SMS message using standard delimiters, for example. The parser module 154 may pass the remainder of the text portion of the enhanced SMS message comprising appended meta-language to a meta-language processing module 156. In some cases, the parser module 154 may check the meta-language for validity as an added security measure. For example, a security code may be appended to meta-language program instructions to ensure that the script is valid and not spoofed.

The SMS client 150 may comprise a meta-language processing module 156. The meta-language processing module 156 may be arranged to embed meta-language into an enhanced SMS message to be sent to a recipient device capable of enhanced SMS messaging. The meta-language may comprise, for example, an interpreted program, script, or other encoding format appended after the text content in the text portion of the enhanced SMS message. The meta-language may be hidden or visible to the user of the mobile computing device 100 and/or the user of the recipient device.

The meta-language processing module 156 also may be arranged to execute meta-language embedded in an enhanced SMS message received from a sender device capable of enhanced SMS messaging. When executed, the embedded meta-language program instructions may provide added communication options causing the enhanced SMS client 150 and/or mobile computing device 100 to act according to remote data inputs or instructional sequences. For example, the enhanced SMS client 150 may act locally at the mobile computing device 100 in response to instructions sent from an enhanced SMS client residing on a remote recipient device.

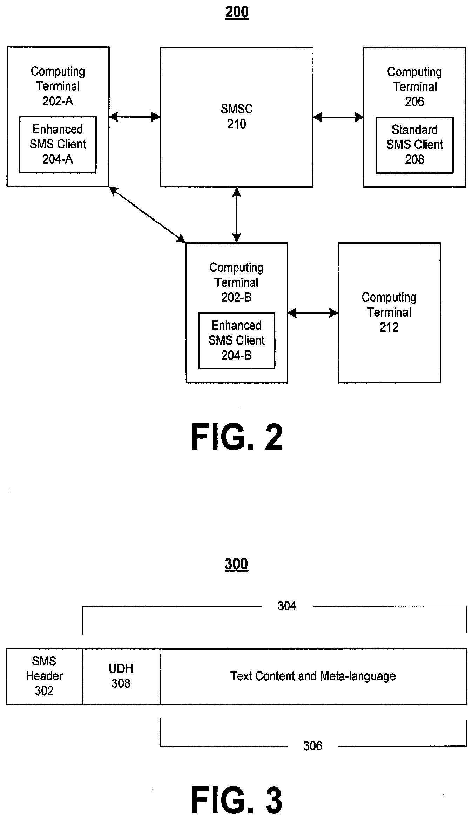

**FIG. 2** illustrates a block diagram of an embodiment of an SMS system 200. In various embodiments, the SMS system 200 may comprise, or form part of a wired communications system, a wireless communications system, or a combination of both. Examples of wired communication media may include, without limitation, a wire, cable, bus, printed circuit board (PCB), Ethernet connection, peer-to-peer (P2P) connection, backplane, switch fabric, semiconductor material, twisted-pair wire, co-axial cable, fiber optic connection, and so forth. Examples of wireless communication media may include, without limitation, a radio channel, satellite channel, television channel, broadcast channel infrared channel, radio-frequency (RF) channel, Wireless Fidelity (WiFi) channel, a portion of the RF spectrum, and/or one or more licensed or license-free frequency bands. Although certain embodiments may be described using a particular communications media by way of example, it may be appreciated that the principles and techniques may be implemented using various communication media and accompanying technology. For example, some embodiments may employ USSD messaging in various implementations.

As shown, the SMS system 200 may include computing terminal 202-A comprising enhanced SMS client 204-A, computing terminal 202-B comprising enhanced SMS client 204-B, and computing terminal 206 comprising standard SMS client 208. Enhanced SMS clients 204-A and 204-B each may comprise an enhanced SMS client such as enhanced SMS client 150. Standard SMS client 208 may perform standard SMS messaging but may be incapable of providing additional communications options offered by enhanced SMS messaging, as described above. The computing terminals 202-A, 202-B, and 206 are coupled to SMSC 210 arranged to operate in accordance with the standard SMS infrastructure and to provide a store-and-forward mechanism for receiving and delivering SMS messages, including enhanced SMS messages, among the computing terminals. It can be appreciated that a limited number of devices are shown for purposes of illustration and not limitation.

In some embodiments, the computing terminals 202-A, 202-B, and 206 may be implemented as SMS enabled mobile devices, such as mobile computing device 100. It can be appreciated, however, that each of the computing terminals 202-A, 202-B, and 206 may comprise or be implemented as various devices such as a personal computer (PC), server-based computer, laptop computer, notebook computer, tablet PC, handheld computer, landline telephone, mobile telephone, personal digital assistant (PDA), combination mobile telephone/PDA, television device, set top box (STB), a gaming console, mobile unit, subscriber station, media player, pager, messaging device, data communication device, consumer electronics (CE) device, A/V equipment, home automation equipment, or any other suitable computing or processing system in accordance with the described embodiments.

In the event that data regarding the enhanced SMS capabilities for the addresses associated with computing devices 202-B and 206 is unavailable and/or requires verification or re-verification at computing device 202-A, the enhanced SMS client 204-A may be arranged to perform a handshake or negotiation to identify and/or authenticate enhanced SMS capabilities of the computing devices 202-B and 206. The enhanced SMS client 204-A may be used to compose and send an SMS message to the addresses associated with computing devices 202-B and 206 to initiate the handshake or negotiation.

The initial SMS message sent from the enhanced SMS client 204-A may comprise a small handshake request token or appendix added to the text portion of the SMS message. For example, the handshake request token for initiating the negotiation may comprise two periods, three characters such as -*- or the like appended to the text portion in the payload.

Upon receiving the appended handshake request token, the standard SMS client 208 renders the initial SMS message as a standard SMS text message with the sequence of punctuation marks or symbols comprising the handshake request token at the end. The computing terminal 206 may respond in a normal way using the standard SMS client 208 or make no response. For example, upon receipt of the message, the appended characters -*- representing the handshake request may be ignored. If the handshake request is ignored and/or if the computing terminal 206 responds with a regular SMS text message, the enhanced SMS client 204-A may assume that the computing terminal 206 currently is incapable of enhanced SMS messaging. The enhanced SMS client 204-A may record and associate data with the address associated with the computing terminal 206 regarding the lack of enhanced SMS messaging capabilities.

Upon receiving the appended handshake request token, the enhanced SMS client 204-B identifies the initial SMS message as an SMS message event as well as a handshake event. At the computing terminal 202-B, the appended handshake request token is stripped from the text portion of the message by the enhanced SMS client 204-B and the remainder of the message is displayed. The enhanced SMS client 204-B may store information indicating that the address associated with the computing terminal 202-A can offer enhanced SMS messaging.

In response to the handshake request token, the enhanced SMS client 204-B at the computing terminal 202-B may automatically send a confirmation or acknowledgement SMS message to the address of the computing terminal 202-A. The acknowledge message may comprise a visible or hidden SMS message indicating that the computing terminal 202-A has been recognized by the enhanced SMS client 204-B as being equipped with enhanced SMS client 202-A. The acknowledgment SMS message also may comprise the version and/or capabilities of the enhanced SMS client 204-B. The computing terminal also may convey restrictions placed on certain communication options according to local device security and privacy preference settings. The enhanced SMS client 204-A may receive the confirmation or acknowledgement message and record enhanced SMS capabilities associated with the address of the computing terminal 202-B.

In some cases, automatically sending an acknowledgement message may be optional. Instead, a small handshake response token and/or the capabilities of the enhanced SMS client 204-B may be appended to the next text response message sent from the address of the computing terminal 202-B. The handshake response token may be visible or transparent to the user. In various embodiments, the handshake response token may comprise a two or three character appendix such as a sequence of punctuation marks or symbols that have no other predefined meaning in the standard SMS character set (e.g., two commas, three characters such as *-* or the like) appended to the text portion in the payload.

The enhanced SMS client 204-A may identify a reply SMS message comprising an appended handshake response token as an SMS message event as well as a handshake event. The enhanced SMS client 204-A may strip the appended handshake response token from the text portion of the message display the remainder of the message. The enhanced SMS client 204-A may store information indicating that the address associated with the computing terminal 202-B can offer enhanced SMS messaging for a baseline of capabilities or extended variable capabilities.

To complete the negotiation, the computing terminal 202-A may send another outbound SMS message to the address associated with the computing terminal 202-B indicating capability ID and/or version of the enhanced SMS client 204-A. The computing terminal 202-A also may convey restrictions placed on certain communication options according to local device security and privacy preference settings. In some cases, exchanged SMS messages may be checked for validity during the negotiation or handshake as an added security measure using a security code token appended to the request and response messages to ensure that the exchanged SMS messages are valid and not spoofed.

Once a successful negotiation has taken place, the enhanced SMS client 204-A on the computing terminal 202-A and the enhanced SMS client 204-B on the computing terminal 202-B each are aware of available enhanced SMS messaging capabilities. The handshake or negotiation may account for variations between the enhanced SMS client 204-A and the enhanced SMS client 204-B as well as for restrictions on certain communication options according to local device security and privacy preference settings.

The enhanced SMS client 204-A on the computing terminal 202-A and the enhanced SMS client 204-B on the computing terminal 202-B may support a common capability. For example, the enhanced SMS client 202-A may be arranged to compare capabilities with the enhanced SMS client 202-B, store a lowest common denominator, and send the common capability to the enhanced SMS client 202-B.

After the enhanced SMS clients 204-A and 204-B successfully complete a handshake and/or otherwise mutually identify each other, additional communication options may be offered for message composition and device interaction. Such additional message options may be provided as new messages and/or reply messages. The enhanced SMS messages may provide additional communication options including enhanced visual, audio, tactile, and/or other control mechanisms. For example, the enhanced SMS client 204-B and/or computing terminal 202-B may be arranged to act according to remote data inputs or instructional sequences sent by the computing terminal 202-A.

The enhanced SMS client 204-A may be arranged to embed meta-language programming instructions into an enhanced SMS message to be sent to the address associated with the computing device 202-B. The enhanced SMS client 204-B may be arranged to parse the text content from the text portion of the enhanced SMS message and to interpret and/or execute the meta-language programming instructions to perform one or more device-specific functions at the computing terminal 202-B. When executed by the enhanced SMS client 204-B, the embedded meta-language program instructions may provide added communication options to the enhanced SMS client 204-B and/or computing terminal 202-B. In some cases, the meta-language may be checked for validity prior to execution as an added security measure using a security code appended to the meta-language program instructions to ensure that the script is valid and not spoofed.

The added communication options may comprise actions and effects for enhancing media content of enhanced SMS messages. For example, the added communication options may enhance visual information, audible information, and/or haptic information. The added communication options also may enhance SMS messaging by executing meta-language program instructions for other control options to initiate a set of routines and/or otherwise affect changes on the computing terminal 202-B. For instance, the meta-language program instructions may set a mode or function, control messaging applications, and/or control access to data sources or memory locations for writing and/or deleting data on the computing terminal 202-B.

The meta-language program instructions may be arranged to query the computing terminal 202-B for certain information. For example, the computing terminal 202-B may allow remote polling of presence or location information according to meta-language program instructions received from a trusted device such as computing terminal 202-A. The computing terminal 202-B may respond to such queries by returning a value or state making programmatic or manual presence (e.g., GPS location, out of office, at home, in car, etc.) visible to the computing terminal 202-A. In some implementations, the computing terminal 202-B may be queried for and return alternate contact information.

The meta-language program instructions may be arranged to control communications functionality of the computing terminal 202-B. For example, the computing terminal 202-B may respond to such instructions by establishing a connection to a computing terminal 212 over a network such as a WLAN, WMAN, WWAN, WPAN, and so forth. The computing terminal 212 may comprise or be implemented as various devices such as a Bluetooth device, home automation equipment, PC, server, laptop computer, notebook computer, tablet PC, handheld computer, landline telephone, mobile telephone, PDA, smart phone, television, STB, gaming console, mobile unit, subscriber station, media player, pager, messaging device, data communication device, CE device, or any other suitable computing or processing system which is consistent with the described embodiments.

**FIG. 3** illustrates an enhanced SMS message packet 300 in accordance with one or more embodiments. In various embodiments, enhanced SMS message packet 300 may be communicated by enhanced SMS clients (e.g., enhanced SMS client 150 and others) in accordance with the standard constraints (e.g., 140 byte and/or 160 character limits) on SMS message content and format. Accordingly, the enhanced SMS message packet 300 may be communicated using the existing SMS messaging infrastructure to provide enhanced SMS messaging while maintaining compatibility with other SMS clients capable of exchanging standard SMS message.

The enhanced SMS message packet 300 may include an SMS header 302 and a payload 304 comprising a text portion 306. In one example, the SMS header 302 may contain a destination address or mobile telephone number (e.g., +353878776543). The text portion 304 of the payload 304 may contain visible text content input by the user (e.g., Hi. RU there?) and meta-language to provided one or more added communication options, as described above. The meta-language may comprise a script implemented as a sequence of alphanumeric characters to be interpreted and/or executed as programming instructions by an enhanced SMS client residing on a recipient device.

In one example, the text portion 306 may contain the embedded meta-language script PCA4B6G1L2,D4,192534a that may be interpreted and/or executed to play a MIDI tune in the key of C including tones A4, B6, and Gland to loop twice; to display the text content using visual effect 4; to access pictogram bank number 9 and show images 253 and 4; and to animate image 4 for emphasis. In this example, the text portion 306 of the payload 304 may comprise:
Hi. RU there? PCA4B6G1L2,D4,192534a

When operating using the underlying infrastructure for standard SMS messaging, an enhanced SMS client may note the total message length and warn of overly large messages as added options are picked and appended to abide by the 140 byte and/or 160 character payload constraints for standard SMS message content. It is noted that each meta-language script will have a character payload. In some cases, the content of the payload 304 and/or text entered by the user in the text portion 306 may be limited by a certain number of characters (e.g., from 160 characters to 135 characters) in order to accommodate the meta-language script and avoid concatenated SMS messages.

As shown in FIG. 3, however, the enhanced SMS message packet 300 may comprise a UDH 308 in some embodiments. In some cases, an enhanced SMS client may support concatenation allowing a long enhanced SMS message to be sent and received as multiple concatenated enhanced SMS messages. In such cases, the payload 304 of each concatenated enhanced SMS message may be limited to 140 bytes and may include the UDH 308 prior to the text portion 306 of the enhanced SMS message packet 300. The UDH 308 may contain segmentation information for allowing an enhanced SMS client residing on a recipient device to reassemble the multiple concatenated SMS messages into a single long enhanced SMS message.

In various embodiments, the UDH 308 may be confined to use in accordance with standard SMS messaging. For example, the UDH 308 may be reserved to contain segmentation information for use in conjunction with concatenation but may be prohibited from including binary data representing media content (e.g., text formatting, predefined icons, pictures, and sounds). Accordingly, in such embodiments, the enhanced SMS packet 300 may be arranged to provide enhanced communication options only by way of the embedded meta-language appended to the text content within the text portion 306 of the payload 304.

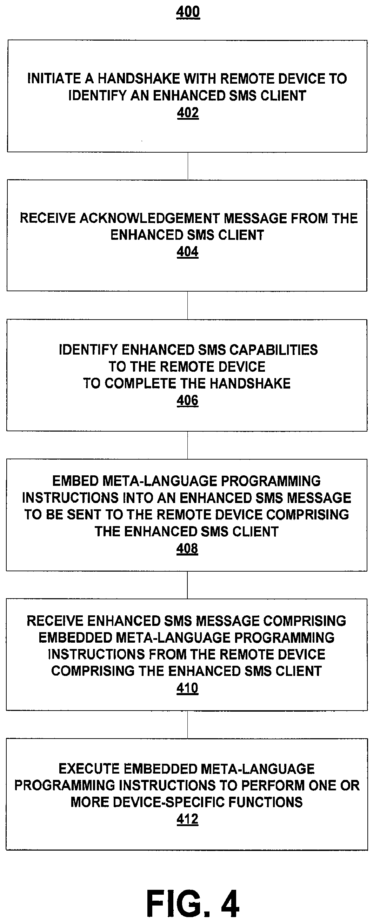

**FIG. 4** illustrates an enhanced SMS logic flow 400 in accordance with one or more embodiments. The logic flow 400 may be performed by various systems and/or devices and may be implemented as hardware, software, and/or any combination thereof, as desired for a given set of design parameters or performance constraints. For example, the logic flow 400 may be implemented by a logic device (e.g., processor) and/or logic comprising instructions, data, and/or code to be executed by a logic device. For purposes of illustration, and not limitation, the logic flow 400 is described with reference to FIG. 1. The embodiments are not limited in this context.

In various embodiments, the logic flow 400 may comprise initiating a handshake or negotiation with a remote device to identify and authenticate an enhanced SMS client through an interchange of SMS messages (block 402), receiving a confirmation or acknowledgement message from the enhanced SMS client (block 404), and identifying enhanced SMS capabilities to the remote device to complete the handshake (block 406).

The logic flow 400 may comprise embedding meta-language programming instructions into an enhanced SMS message to be sent to the remote device comprising the enhanced SMS client (block 408). The meta-language programming instructions may comprise, for example, an interpreted program, script, or other encoding format appended after the text content in the text portion of the enhanced SMS message. The meta-language programming instructions may be hidden or visible to the user.

The meta-language programming instructions may enhance visual information, audible information, and/or haptic information. The meta-language program instructions may control options to initiate a set of routines and/or otherwise affect changes on the recipient device. For instance, the meta-language program instructions may set a mode or function, control messaging applications, and/or control access to data sources or memory locations for writing and/or deleting data on the recipient device.

The meta-language programming instructions may query the recipient device for certain information such as presence or location information and/or alternate contact information. The meta-language program instructions may control communications functionality of the remote device such as communication over a network such as a WLAN, WMAN, WWAN, WPAN, and so forth.

The logic flow 400 may comprise receiving an enhanced SMS message comprising embedded meta-language programming instructions from the remote device comprising the enhanced SMS client (block 410). In various embodiments, the text content of the enhanced SMS message may be parsed from the text portion using standard delimiters, and the remainder of the text portion of the enhanced SMS message comprising the appended meta-language programming instructions may be executed to perform one or more device-specific functions (block 412).

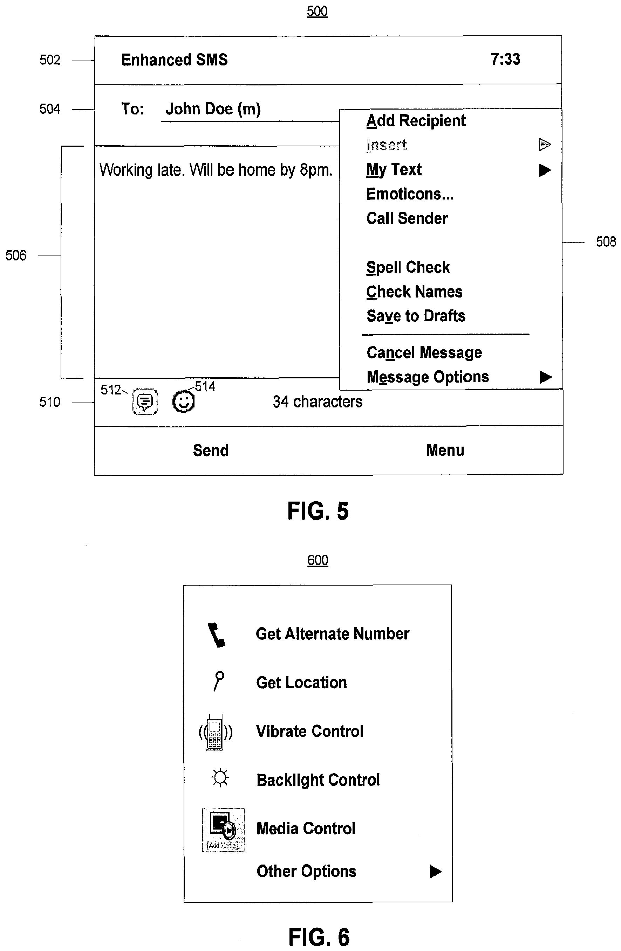

**FIG. 5** illustrates an enhanced SMS messaging GUI 500 in accordance with one or more embodiments. The enhanced SMS messaging GUI 500 may be displayed to a user of the mobile computing device 100 of FIG. 1, for example. In various embodiments, the enhanced SMS messaging GUI 500 may be supported by an enhanced SMS client (e.g., enhanced SMS client 150 and others).

As shown, the enhanced SMS messaging GUI 500 may comprise a title bar 502 for displaying the name of the enhanced SMS messaging application and the current time. The enhanced SMS messaging GUI 500 also may comprise an address bar 504. As shown, the address bar 504 may comprise a 'To' field which may display the contact name (e.g., John Doe) through reverse look up in the contact records or the telephone number of the recipient. In some cases, the address bar 504 may comprise other items such as a 'CC' field, a 'BCC' field, a subject field, status line (e.g., message priority, receipt status, errors, receipt request, validity period), callback number, and so forth.

The enhanced SMS messaging GUI 500 may comprise a message composition area 506 for entering SMS message text content. The enhanced SMS messaging GUI 500 may be arranged to display a menu 508 in response to pressing a menu button or by tapping and holding the screen, for example. Exemplary items or soft keys for the menu 508 may include, without limitation, Add Recipient, Insert, My Text, Emoticons, Call Sender, Spell Check, Check Names, Save to Drafts, Cancel Message, and Message Options. The embodiments are not limited in this context.

The enhanced SMS messaging GUI 500 may comprise a status bar 510. As shown, the status bar 510 may comprise a text button 512 for displaying a pop-up list of boilerplate text strings that can be inserted into messages and edited. The status bar 510 may comprise an emoticon button 514 to display a pop-up of emoticons that can be inserted into the text area and may note total message length.

**FIG. 6** illustrates an enhanced SMS messaging GUI 600 in accordance with one or more embodiments. The enhanced SMS messaging GUI 600 may be displayed to a user of the mobile computing device 100 of FIG. 1, for example. In various embodiments, the enhanced SMS messaging GUI 600 may be supported by an enhanced SMS client (e.g., enhanced SMS client 150 and others).

The enhanced SMS messaging GUI 600 may be arranged to allow a user to add one or more communication options while composing an enhanced SMS message. In various implementations, the enhanced SMS messaging GUI 600 may be displayed when the user selects the Message Options menu item in the menu 508 of the enhanced SMS messaging GUI 500 of FIG. 5. As shown, the enhanced SMS messaging GUI 600 may display a pick list of various added communication options. Exemplary items or soft keys for the pick list may include, without limitation, Get Alternate Number, Get Location, Vibrate Control, Backlight Control, Media Control, and other options as described above.

In some embodiments, the items on the pick list may be limited by the capabilities of the enhanced SMS client on the sending device, the capabilities of an enhanced SMS client on a recipient device, a common capability, and/or restrictions on certain communication options according to local device security and privacy preference settings. In response to receiving a selection one or more items from the pick list, the enhanced SMS client supporting the enhanced SMS messaging GUI 600 may embed meta-language programming instructions into an enhanced SMS message being composed.

Numerous specific details have been set forth to provide a thorough understanding of the embodiments. It will be understood, however, that the embodiments may be practiced without these specific details. In other instances, well-known operations, components and circuits have not been described in detail so as not to obscure the embodiments. It can be appreciated that the specific structural and functional details are representative and do not necessarily limit the scope of the embodiments.

Various embodiments may comprise one or more elements. An element may comprise any structure arranged to perform certain operations. Each element may be implemented as hardware, software, or any combination thereof, as desired for a given set of design and/or performance constraints. Although an embodiment may be described with a limited number of elements in a certain topology by way of example, the embodiment may include more or less elements in alternate topologies as desired for a given implementation.

It is worthy to note that any reference to "one embodiment" or "an embodiment" means that a particular feature, structure, or characteristic described in connection with the embodiment is included in at least one embodiment. The appearances of the phrase "in one embodiment" in the specification are not necessarily all referring to the same embodiment.

Unless specifically stated otherwise, it may be appreciated that terms such as "processing," "computing," "calculating," "determining," or the like, refer to the action and/or processes of a computer or computing system, or similar electronic computing device, that manipulates and/or transforms data represented as physical quantities (e.g., electronic) within registers and/or memories into other data similarly represented as physical quantities within the memories, registers or other such information storage, transmission or display devices.

It is worthy to note that some embodiments may be described using the expression "coupled" and "connected" along with their derivatives. These terms are not intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other. With respect to software elements, for example, the term "coupled" may refer to interfaces, message interfaces, API, exchanging messages, and so forth.

Some of the figures may include a flow diagram. Although such figures may include a particular logic flow, it can be appreciated that the logic flow merely provides an exemplary implementation of the general functionality. Further, the logic flow does not necessarily have to be executed in the order presented unless otherwise indicated. In addition, the logic flow may be implemented by a hardware element, a software element executed by a processor, or any combination thereof.

While certain features of the embodiments have been illustrated as described above, many modifications, substitutions, changes and equivalents will now occur to those skilled in the art. It is therefore to be understood that the appended claims are intended to cover all such modifications and changes as fall within the true spirit of the embodiments.

Some of the figures may include a flow diagram. Although such figures may include a particular logic flow, it can be appreciated that the logic flow merely provides an exemplary implementation of the general functionality. Further, the logic flow does not necessarily have to be executed in the order presented unless otherwise indicated. In addition, the logic flow may be implemented by a hardware element, a software element executed by a processor, or any combination thereof.

While certain features of the embodiments have been illustrated as described above, many modifications, substitutions, changes and equivalents will now occur to those skilled in the art.

## Claims

1. An apparatus comprising:
a computing device (100) comprising an enhanced short message service, SMS, client (150) operative to send and receive enhanced messages, each enhanced message including a payload comprising embedded meta-language programming instructions appended to text content (138) of the enhanced message, wherein the enhanced SMS client (150) is operative to display a graphical user interface (500) comprising a pick list of communication options and to embed the meta-language programming instructions in response to a selection from the pick list **characterised by** the computing device being operative to perform a handshake (152) to identify another enhanced SMS client (150), and wherein the handshake (152) comprises:
an acknowledgement SMS message (404); and/or
wherein the handshake (152) comprises an SMS message comprising a handshake response token.

2. The apparatus of claim 1, wherein the meta-language programming instructions are embedded (408) by the enhanced SMS client (150); and/or wherein meta-language programming instructions are embedded by a remote device and executed by the enhanced SMS client (150).

3. The apparatus of any preceding claim, wherein the meta-language programming instructions:
control visual information; and/or
control audio information; and/or
control haptic information; and/or
control memory access; and/or
query for information; and/or
control communications functionality.

4. The apparatus of any preceding claim, wherein the enhanced SMS client (150) is operative to modulate the meta-language programming instructions based on preference settings.

5. A method comprising:
performing a handshake (152) with a remote device to identify an enhanced short message service, SMS, client (150), wherein the handshake (152) comprises an acknowledgement SMS message, and/or wherein the handshake (152) comprises an SMS message comprising a handshake response token;
displaying a graphical user interface (500) comprising a pick list of communication options;
embedding (408) the meta-language programming instructions in response to receiving a selection from the pick list; and
sending an enhanced message to the enhanced SMS client (150), the enhanced message including a payload comprising embedded meta-language programming instructions appended to text content of the enhanced message.

6. A method comprising:
performing a handshake (152) with a remote device to identify an enhanced short message service, SMS, client (150), wherein the handshake (152) comprises an acknowledgement SMS message (404), and/or wherein the handshake comprises an SMS message comprising a handshake response token
receiving an enhanced message from the remote computing device comprising enhanced short message service, SMS, client (150), the enhanced message including a payload comprising embedded meta-language programming instructions selected from a pick-list appended to text content of the enhanced message; and
executing (412) the meta-language programming instructions to perform one or more device-specific functions.

7. The method of claim 6, further comprising modulating the meta-language programming instructions based on preference settings.

8. The method of claim 6 or claim 7, wherein the meta-language programming instructions:
control visual information; and/or
control audio information; and/or
control haptic information; and/or
control memory access; and/or
query for information; and/or
control communications functionality.

9. A computer program comprising computer-readable program elements operative in a computing device to implement the method of any one of claims 5 to 8.

10. A computer-readable storage medium comprising the computer-readable program elements of claim 9.

## Patentansprüche

1. Vorrichtung, die Folgendes umfasst:
ein Computergerät (100), das einen erweiterten SMS-(Short Message Service)-Client (150) mit der Aufgabe umfasst, erweiterte Nachrichten zu senden und zu empfangen, wobei jede erweiterte Nachricht eine Nutzlast beinhaltet, die eingebettete Meta-Sprachprogrammierbefehle umfasst, die an Textinhalt (138) der erweiterten Nachricht angehängt sind, wobei der erweiterte SMS-Client (150) die Aufgabe hat, eine grafische Benutzeroberfläche (500) anzuzeigen, die eine Pickliste von Kommunikationsoptionen umfasst, und die Meta-Sprachprogrammierbefehle als Reaktion auf eine Auswahl aus der Pickliste einzubetten, **dadurch gekennzeichnet, dass** das Computergerät die Aufgabe hat, einen Handshake (152) zum Identifizieren eines anderen erweiterten SMS-Client (150) durchzuführen, und wobei der Handshake (152) Folgendes umfasst:
eine Bestätigungs-SMS-Nachricht (404); und/oder
wobei der Handshake (152) eine SMS-Nachricht umfasst, die ein Handshake-Response-Token umfasst.

2. Vorrichtung nach Anspruch 1, wobei die Meta-Sprachprogrammierbefehle von dem erweiterten SMS-Client (150) eingebettet (408) werden; und/oder
wobei Meta-Sprachprogrammierbefehle von einem fernen Gerät eingebettet und von dem erweiterten SMS-Client (150) ausgeführt werden.

3. Vorrichtung nach einem vorherigen Anspruch, wobei die Meta-Sprachprogrammierbefehle:
visuelle Informationen steuern; und/oder
Audioinformationen steuern; und/oder
haptische Informationen steuern; und/oder
Speicherzugriff steuern; und/oder
Informationen abfragen; und/oder
Kommunikationsfunktionalität steuern.

4. Vorrichtung nach einem vorherigen Anspruch, wobei der erweiterte SMS-Client (150) die Aufgabe hat, die Meta-Sprachprogrammierbefehle auf der Basis von Präferenzeinstellungen zu modulieren.

5. Verfahren, das Folgendes beinhaltet:
Durchführen eines Handshake (152) mit einem fernen Gerät zum Identifizieren eines erweiterten SMS-(Short Message Service)-Client (150), wobei der Handshake (152) eine Bestätigungs-SMS-Nachricht umfasst und/oder wobei der Handshake (152) eine SMS-Nachricht umfasst, die ein Handshake-Response-Token umfasst;
Anzeigen einer grafischen Benutzeroberfläche (500), die eine Pickliste von Kommunikationsoptionen umfasst;
Einbetten (408) der Meta-Sprachprogrammierbefehle als Reaktion auf den Empfang einer Auswahl aus der Pickliste; und
Senden einer erweiterten Nachricht zu dem erweiterten SMS-Client (150), wobei die erweiterte Nachricht eine Nutzlast beinhaltet, die eingebettete Meta-Sprachprogrammierbefehle umfasst, die an Textinhalt der erweiterten Nachricht angehängt sind.

6. Verfahren, das Folgendes beinhaltet:
Durchführen eines Handshake (152) mit einem fernen Gerät zum Identifizieren eines erweiterten SMS-(Short Message Service)-Client (150), wobei der Handshake (152) eine Bestätigungs-SMS-Nachricht (404) umfasst und/oder wobei der Handshake eine SMS-Nachricht umfasst, die ein Handshake-Response-Token umfasst,
Empfangen einer erweiterten Nachricht von dem fernen Computergerät, der einen erweiterten SMS-(Short Message Service)-Client (150) umfasst, wobei die erweiterte Nachricht eine Nutzlast beinhaltet, die eingebettete Meta-Sprachprogrammierbefehle umfasst, die aus einer Pickliste ausgewählt sind, die an Textinhalt der erweiterten Nachricht angehängt ist; und
Ausführen (412) der Meta-Sprachprogrammierbefehle zum Durchführen von einer oder mehreren gerätespezifischen Funktionen.

7. Verfahren nach Anspruch 6, das ferner das Modulieren der Meta-Sprachprogrammierbefehle auf der Basis von Präferenzeinstellungen beinhaltet.

8. Verfahren nach Anspruch 6 oder Anspruch 7, wobei die Meta-Sprachprogrammierbefehle:
visuelle Informationen steuern; und/oder
Audioinformationen steuern; und/oder
haptische Informationen steuern; und/oder
Speicherzugriff steuern; und/oder
Informationen abfragen; und/oder
Kommunikationsfunktionalität steuern.

9. Computerprogramm, das computerlesbare Programmelemente umfasst mit der Aufgabe, in einem Computergerät das Verfahren nach einem der Ansprüche 5 bis 8 durchzuführen.

10. Computerlesbares Speichermedium, das die computerlesbaren Programmelemente nach Anspruch 9 umfasst.

## Revendications

1. Appareil comprenant :
un dispositif informatique (100) comprenant un client d'un service de messages courts, SMS, rehaussé (150) servant à envoyer et recevoir des messages rehaussés, chaque message rehaussé comportant une charge utile comprenant des instructions de programmation en métalangage intégrées ajoutées à un contenu de texte (138) du message rehaussé, dans lequel le client SMS rehaussé (150) sert à afficher une interface utilisateur graphique (500) comprenant une liste de choix d'options de communication et à intégrer les instructions de programmation en métalangage en réponse à une sélection dans la liste de choix **caractérisé en ce que** le dispositif informatique sert à exécuter un colloque (152) pour identifier un autre client SMS rehaussé (150), et dans lequel le colloque (152) comprend :
un message SMS d'acquittement (404) ; et/ou
dans lequel le colloque (152) comprend un message SMS comprenant un jeton de réponse de colloque.

2. Appareil selon la revendication 1, dans lequel les instructions de programmation en métalangage sont intégrées (408) par le client SMS rehaussé (150) ; et/ou dans lequel les instructions de programmation en métalangage sont intégrées par un dispositif distant et exécutées par le client SMS rehaussé (150).

3. Appareil selon l'une quelconque des revendications précédentes, dans lequel les instructions de programmation en métalangage :
commandent des informations visuelles ; et/ou
commandent des informations audio ; et/ou
commandent des informations haptiques ; et/ou
commandent un accès mémoire ; et/ou
demandent des informations ; et/ou
commandent des fonctions de communication.

4. Appareil selon l'une quelconque des revendications précédentes, dans lequel le client SMS rehaussé (150) sert à moduler les instructions de programmation en métalangage en fonction de réglages de préférence.

5. Procédé comprenant :
l'exécution d'un colloque (152) avec un dispositif distant pour identifier un client d'un service de messages courts, SMS, rehaussé (150), dans lequel le colloque (152) comprend un message SMS d'acquittement, et/ou dans lequel le colloque (152) comprend un message SMS comprenant un jeton de réponse de colloque ;
l'affichage d'une interface utilisateur graphique (500) comprenant une liste de choix d'options de communication ;
l'intégration (408) des instructions de programmation en métalangage en réponse à la réception d'une sélection dans la liste de choix ; et
l'envoi d'un message rehaussé au client SMS rehaussé (150), le message rehaussé comportant une charge utile comprenant des instructions de programmation en métalangage intégrées ajoutées à un contenu de texte du message rehaussé.

6. Procédé comprenant :
l'exécution d'un colloque (152) avec un dispositif distant pour identifier un client d'un service de messages courts, SMS, rehaussé (150), dans lequel le colloque (152) comprend un message SMS d'acquittement (404), et/ou dans lequel le colloque comprend un message SMS comprenant un jeton de réponse de colloque ;
la réception d'un message rehaussé depuis le dispositif informatique distant comprenant un client d'un service de messages courts, SMS, rehaussé (150), le message rehaussé comportant une charge utile comprenant des instructions de programmation en métalangage intégrées sélectionnées dans une liste de choix ajoutée à un contenu de texte du message rehaussé ; et
l'exécution (412) des instructions de programmation en métalangage pour exécuter une ou plusieurs fonctions spécifiques au dispositif.

7. Procédé selon la revendication 6, comprenant en outre la modulation des instructions de programmation en métalangage en fonction de réglages de préférence.

8. Procédé selon la revendication 6 ou la revendication 7, dans lequel les instructions de programmation en métalangage :
commandent des informations visuelles ; et/ou
commandent des informations audio ; et/ou
commandent des informations haptiques ; et/ou
commandent un accès mémoire ; et/ou
demandent des informations ; et/ou
commandent des fonctions de communication.

9. Programme informatique comprenant des éléments de programme lisibles par ordinateur servant dans un dispositif informatique à mettre en oeuvre le procédé selon l'une quelconque des revendications 5 à 8.

10. Support de mémorisation lisible par ordinateur comprenant les éléments de programme lisibles par ordinateur selon la revendication 9.
